# EUROPEAN PATENT SPECIFICATION

(11) **EP 1 906 396 B1**
(45) Date of publication and mention of the grant of the patent: **28.07.2010**
(21) Application number: 07018906.3
(22) Date of filing: 26.09.2007
(51) Int. Cl.: G11B 7/12, G11B 7/135, G11B 7/22

(54) **Tilt adjusting mechanism for objective lens**
Einstellbare Neigungsvorrichtung für Objektivlinse
Mécanisme de réglage d'inclinaison pour une lentille d'objectif

(30) Priority: 29.09.2006 JP 2006266269
(43) Date of publication of application: 02.04.2008
(73) Proprietor: Funai Electric Co., Ltd., Daito-shi, Osaka 574-0013 (JP)
(72) Inventor: Sasaoka, Hiromasa, Daito-shi Osaka 574-0013 (JP)
(74) Representative: Beetz & Partner

(56) References cited:
- JP-A- 5 101 429
- JP-A- 10 011 765
- JP-A- 2002 269 790
- US-A1- 2005 007 906

## Description

### BACKGROUND OF THE INVENTION

### 1. Field of the Invention

The present invention relates to a tilt adjusting mechanism for an objective lens. For example, it relates to the tilt adjusting mechanism that performs relative tilt adjustment of objective lenses in an optical pickup device having a plurality of objective lenses and an actuator for driving the objective lenses.

### 2. Description of Related Art

In an optical pickup device having a plurality of objective lenses, if coma aberration that may occur due to a relative tilt of the objective lenses has different occurrence direction and occurrence quantity, optical performance of the optical pickup device will be lowered. In order to solve this problem, there is proposed a technique for performing relative tilt adjustment of a plurality of objective lenses in JP-A-2006-19001, JP-A-H11-120602, JP-A-H10-11765 and the like. A tilt adjusting mechanism described in JP-A-2006-19001 or JP-A-H11-120602 has a structure in which an attachment surface for the objective lens is directly provided with a tapered surface, a curved surface or the like so that the tilt adjustment of the objective lens can be performed. The tilt adjusting mechanism described in JP-A-H10-11765 has a structure in which a tilting holder to which the objective lens is fixed is tilted for adjustment with respect to the lens holder. In addition, techniques for performing tilt adjustment of a single objective lens described in JP-A-H5-101429, JP-A-H6-258560 and JP-A-H9-35322 are known.

The optical pickup device having a plurality of objective lenses needs a mechanism for avoiding a collision between the actuator for driving the objective lens and an optical disc, so that an objective lens having a short working distance does not come into collision with the optical disc. However, if a collision avoidance mechanism is mounted on the actuator, a structure of the actuator may be complicated. As a result, it becomes difficult to mount a tilt adjusting mechanism for performing relative tilt adjustment of the objective lenses. This point is not considered in the tilt adjusting mechanisms described in the above-mentioned six patent documents. Therefore, if the tilt adjusting mechanism described in each of them is used in the actuator, it becomes difficult to incorporate a function of avoiding a collision between the optical disc and the objective lens.

US 2007/007906 A1 discloses an optical pickup device and an optical disk device capable of realizing at least one the objects of thickness reduction, size reduction and suppression against characteristic deterioration, even where a coping with various wavelengths of laser includes a blue laser. The disclosed optical pickup device comprises light sources for respectively emitting a plurality of different wavelengths of light, a unit structured for causing at least a part of the light emitted from the light sources to pass a same optical path; and a focusing unit for focusing the light. The focusing unit is disclosed to include at least first and second focusing parts, the first focusing part being to focus mainly a wavelength of light different from a wavelength of light to be mainly focused by the second focusing part.>

This document also discloses the preamble of the independent claim 1.

### SUMMARY OF THE INVENTION

An object of the present invention is to provide a tilt adjusting mechanism that enables reduction of relative tilt quantity of a plurality of objective lenses and collision avoidance between an optical disc and an objective lens, and to provide an actuator for driving the objective lens equipped with the tilt adjusting mechanism, as well as an optical pickup device.

In an aspect of the present invention, a tilt adjusting mechanism adjusts a tilt of at least one of a plurality of objective lenses arranged to face the optical disc so that they have the same inclination state. The tilt adjusting mechanism includes a lens retaining cylinder to which the objective lens to be a target of the adjustment is fixed, and a protector member to which the lens retaining cylinder is fixed from a slidable state for the adjustment. As a surface for sliding movement of the lens retaining cylinder with respect to the protector member, there is provided a sliding surface that is a part of a spherical surface having a center that is a principal point of the objective lens or its adjacent. In order to prevent a collision between the objective lens and the optical disc, the protector member has a portion that protrudes toward the optical disc.

### BRIEF DESCRIPTION OF THE DRAWINGS

Fig. 1 is a partial cross sectional view showing an embodiment of an actuator having a tilt adjusting mechanism.
Fig. 2 is a partial cross sectional view showing an arrangement of a protector member and a lens retaining cylinder constituting the tilt adjusting mechanism shown in Fig. 1.
Fig. 3 is a cross sectional view showing an inner structure of the tilt adjusting mechanism and the like shown in Fig. 1.
Fig. 4 is a plan view showing a general structure of the actuator shown in Fig. 1.
Fig. 5 is a cross sectional view cut along the line V-V' in Fig. 4.
Fig. 6 is a schematic diagram showing a first example of an optical structure of an optical pickup device.
Fig. 7 is a schematic diagram showing a second example of an optical structure of the optical pickup device.
Figs. 8A-8H are cross sectional views showing examples of a sliding structure of the tilt adjusting mechanism.

### DETAILED DESCRIPTION OF THE PREFERRED EMBODIMENTS

Hereinafter, embodiments and the like of a tilt adjusting mechanism for an objective lens, an actuator, and an optical pickup device according to the present invention will be described with reference to the attached drawings. However, an application of the tilt adjusting mechanism according to the present invention is not limited to the optical pickup device. It can be applied to other optical equipment having a plurality of objective lenses that face an optical object. Note that the same parts or corresponding parts among individual structures are denoted by the same reference signs so that overlapping descriptions can be omitted as necessity.

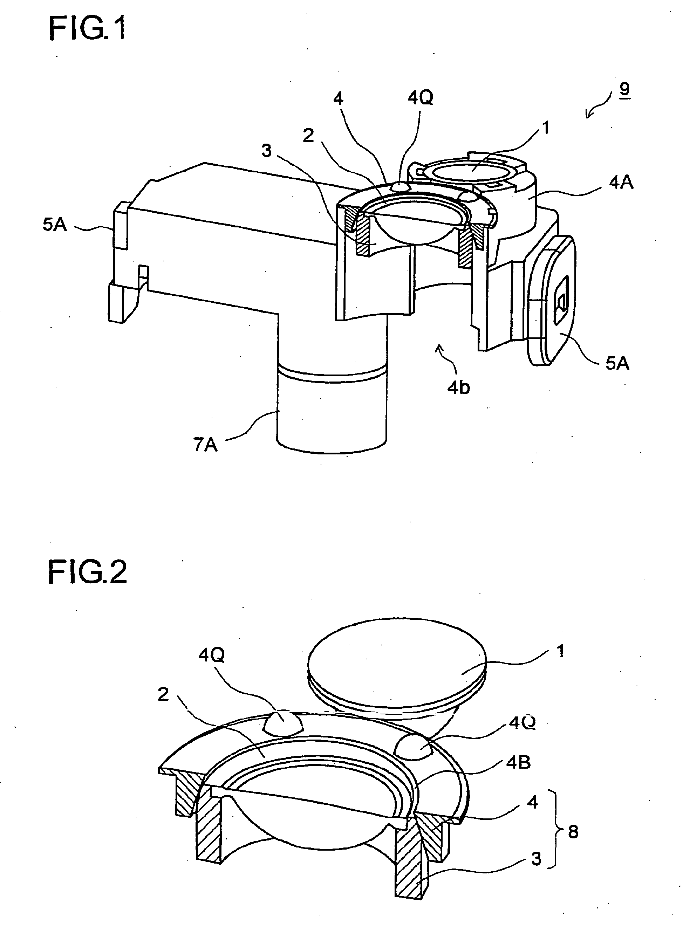

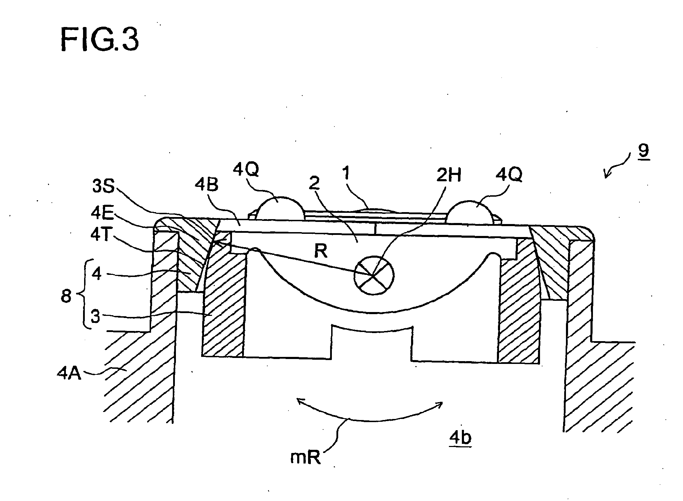

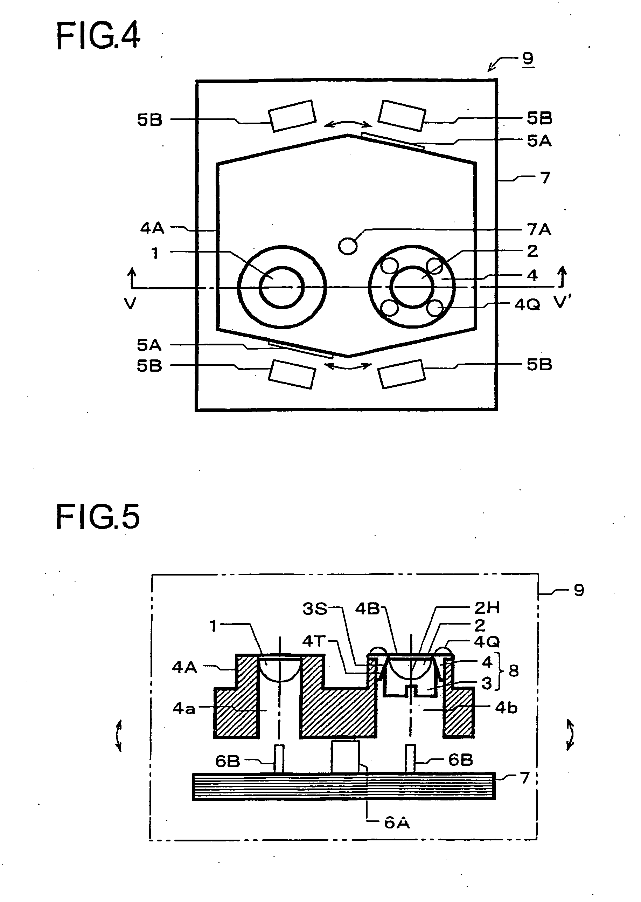

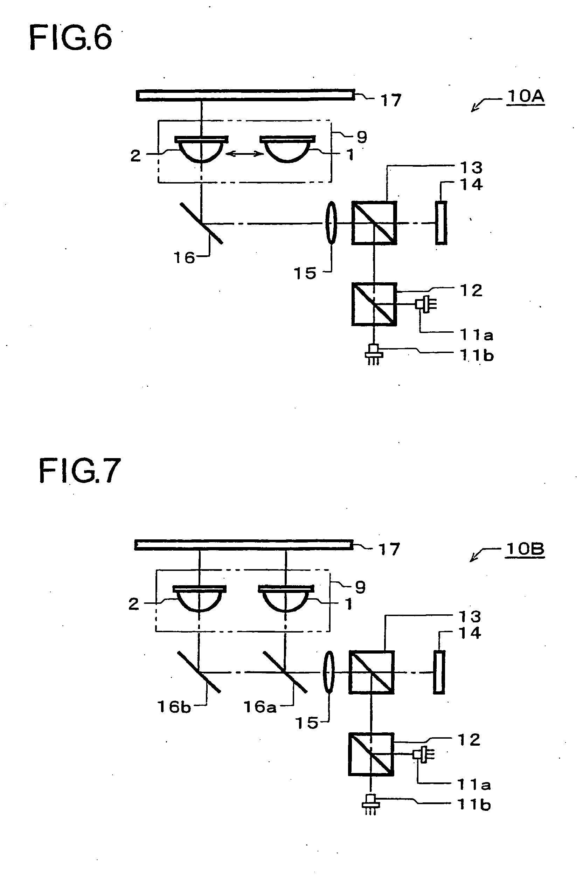

Fig. 1 shows a partial cross section of an embodiment of an actuator 9 having a tilt adjusting mechanism. In addition, Fig. 2 shows an arrangement of first and second objective lenses 1 and 2, a lens retaining cylinder 3 and a protector member 4. Fig. 3 shows an inner structure of a tilt adjusting mechanism 8 and the like. Further, Figs. 4 and 5 show an appearance and an inner structure of the actuator 9 in a simplified manner. Here, Fig. 4 is a plan view of the actuator 9, and Fig. 5 is a cross sectional view cut along the line V-V' in Fig. 4. First and second examples of an optical structure of the optical pickup device equipped with the actuator 9 are shown in Figs. 6 and 7, respectively. Note that a drawing that shows a structure for polarization and separation including a quarter-wave plate or the like for go and back of an optical path is omitted.

In an optical pickup device 10A shown in Fig. 6, a blue laser beam (having a wavelength of 405 nm, for example) emitted from a semiconductor laser 11a is reflected by polarizing beam splitters 12 and 13 in turn, and then it is made parallel rays by a collimator lens 15. On the other hand, a red laser beam (having a wavelength of 650 nm, for example) emitted from a semiconductor laser 11b passes through the polarizing beam splitter 12 and is reflected by the polarizing beam splitter 13, and then it is made parallel rays by the collimator lens 15. The laser beam that goes out from the collimator lens 15 is reflected by an upstand mirror 16 and is condensed by a first objective lens 1 or a second objective lens 2 to reach a recording surface of an optical disc 17.

Switching between the first objective lens 1 and the second objective lens 2 is performed by rotating a lens holder 4A around a shaft 7A as shown in Figs. 1 and 4. Coils 5A are attached to two positions of the lens holder 4A, and the lens holder 4A is driven to rotate by interaction between the coils 5A and four magnets 5B disposed around the lens holder 4A. This rotation action of the lens holder 4A enables switching action of inserting one of the first and the second objective lenses 1 and 2 in the optical path and pulling out the other from the optical path.

The laser beam reflected by the recording surface of the optical disc 17 (see Fig. 6) is reflected by the upstand mirror 16 after passing through the first objective lens 1 or the second objective lens 2. Then, it passes through the collimator lens 15 and passes through the polarizing beam splitter 13 so as to reach a photodetector 14. The photodetector 14 delivers an electric signal corresponding to light information of the received laser beam. Note that the oscillation wavelengths of the semiconductor lasers 11a and 11b are not limited to the values described above. In addition, the number of the semiconductor lasers to be used and the number of the objective lenses are set in accordance with types of optical discs to be supported.

In an optical pickup device 10B shown in Fig. 7, a blue laser beam (having a wavelength of 405 nm, for example) emitted from the semiconductor laser 11a is reflected by the polarizing beam splitters 12 and 13 in turn, and then it is made parallel rays by a collimator lens 15. On the other hand, a red laser beam (having a wavelength of 650 nm, for example) emitted from the semiconductor laser 11b passes through the polarizing beam splitter 12 and is reflected by the polarizing beam splitter 13, and then it is made parallel rays by the collimator lens 15. The blue laser beam that goes out from the collimator lens 15 is reflected by a dichroic mirror 16a and then is condensed by the first objective lens 1 to reach a recording surface of the optical disc 17. On the other hand, the red laser beam that goes out from the collimator lens 15 passes through the dichroic mirror 16a and is reflected by an upstand mirror 16b, and then it is condensed by the second objective lens 2 to reach the recording surface of the optical disc 17.

The optical pickup device 10B shown in Fig. 7 has a structure in which the dichroic mirror 16a branches the optical path, so it does not perform the switching between the first and the second objective lenses 1 and 2 by the rotation action of the lens holder 4A. In other words, there is no structure for rotating the lens holder 4A (as shown in Fig. 4 or the like), and other structure of the actuator 9 provided to the optical pickup device 10B is the same as that provided to the optical pickup device 10A. Therefore, the tilt adjusting mechanism 8 that will be described later (see Fig. 5) is used in the actuator 9 provided to the optical pickup device 10B in the same manner as the optical pickup device 10A.

The blue laser beam reflected by the recording surface of the optical disc 17 (see Fig. 7) is reflected by the dichroic mirror 16a after passing through the first objective lens 1. The red laser beam reflected by the recording surface of the optical disc 17 passes through the second objective lens 2, then is reflected by the upstand mirror 16 and passes through the dichroic mirror 16a. The laser beam that goes out from the dichroic mirror 16a passes through the collimator lens 15 and the polarizing beam splitter 13 in turn, and then it reaches the photodetector 14. The photodetector 14 produces an electric signal corresponding to light information of the received laser beam. Note that oscillation wavelengths of the semiconductor lasers 11a and 11b are not limited to the values described above. In addition, the number of the semiconductor lasers to be used and the number of the objective lenses are set in accordance with types of optical discs to be supported.

If there is a relative tilt between the first and the second objective lenses 1 and 2 of the optical pickup devices 10A and 10B described above, differences of occurrence direction and occurrence quantity of coma aberration that may occur due to the relative tilt may cause deterioration of optical performance of the optical pickup devices 10A and 10B. In order to solve this problem, the optical pickup devices 10A and 10B are equipped with the tilt adjusting mechanism 8 that performs relative tilt adjustment between the first and the second objective lenses 1 and 2. The tilt adjusting mechanism 8 has a function of adjusting a tilt of the second objective lens 2 so that both the first and the second objective lenses 1 and 2 arranged to face the optical disc 17 become the same tilt state, and it is mounted on the actuator 9 for driving the objective lens as shown in Figs. 1, 3, 5 and the like.

The actuator 9 is a device that moves the first and the second objective lenses 1 and 2 for focusing or tracking, and it is made up of the lens retaining cylinder 3 (see Figs. 1-3 and 5), the protector member 4 (see Figs. 1-5), the lens holder 4A (see Figs. 1, 3 and 5), a base 7(see Figs. 4 and 5) and the like. As shown in Fig. 5, a coil 6A and magnets 6B are disposed on the base 7 as a driving source for moving the first and the second objective lenses 1 and 2 in the focusing direction.

In order to prevent a collision between the first or the second objective lens 1 or 2 and the optical disc 17, the second objective lens 2 is provided with the protector member 4 (see Figs. 1-5) on the side facing the optical disc 17. The protector member 4 is provided with four protrusions 4Q (see Figs. 1-5) formed on the side facing the optical disc 17. Each of the protrusions 4Q protruding toward the optical disc 17 has a round shape. Therefore, even if the first and the second objective lenses 1 and 2 approach and collide against the optical disc 17 upon focus movement, damage to the optical disc 17 due to the collision can be relieved. Preferably, this protector member 4 is made of a resin that is softer than a protection film of the optical disc 17 and is easily worn (e.g., a resin of polyacetal or polyurethane). Thus, a damage that the optical disc 17 may receive can be reduced effectively.

The lens holder 4A is provided with an optical path hole 4a (see Fig. 5) at which the first objective lens 1 is placed and an optical path hole 4b (see Figs. 1, 3 and 5) at which the second objective lens 2 is placed. Each of the optical path holes 4a and 4b is a cylindrical through hole having circular openings. The first objective lens 1 is fixed to the side of the optical path hole 4a facing the optical disc 17, while an protector member 4 is fixed to the side of the optical path hole 4b facing the optical disc 17. The protector member 4 is provided with an optical path hole 4B that has a circular opening, and a taper surface 4T is formed on an inside portion 4E of the optical path hole 4B (see Fig. 3). The lens retaining cylinder 3 to which the second objective lens 2 is fixed is arranged to contact the taper surface 4T of the protector member 4. An aperture may be provided to the optical path holes 4a and 4b, or the lens retaining cylinder 3 may have a function of the aperture with respect to the optical path hole 4b. Note that fixing of the first objective lens 1 and the protector member 4 to the lens holder 4A, as well as fixing of the second objective lens 2 to the lens retaining cylinder 3 can be performed by using adhesive, for example.

As shown in Figs. 3, 5 and the like, the tilt adjusting mechanism 8 is made up of the lens retaining cylinder 3 to which the second objective lens 2 to be a target of the tilt adjustment is fixed, and the protector member 4 to which the lens retaining cylinder 3 is fixed from a slidable state for the tilt adjustment. Furthermore, as a surface for sliding movement of the lens retaining cylinder 3 with respect to the protector member 4, the lens retaining cylinder 3 has a sliding surface 3S that is a part of a spherical surface (a spherical surface having a radius R as shown in Fig. 3) having a center that is a principal point 2H of the second objective lens 2 (or its adjacent). The sliding action for the tilt adjustment is performed on the taper surface 4T made up of the inside portion 4E of the protector member 4. In other words, the sliding surface 3S is made contact with the taper surface 4T of the protector member 4 while the lens retaining cylinder 3 is rotated by using a predetermined jig (as shown in an arrow mR in Fig. 3), so that the tilt adjustment of the second objective lens 2 can be performed.

After performing the tilt adjustment of the second objective lens 2, the lens retaining cylinder 3 is fixed to the lens holder 4A at a few points by using adhesive (e.g., an ultraviolet curing adhesive), so that the first and the second objective lenses 1 and 2 are integrated with the lens holder 4A in the state where there is no relative tilt between them. Since the first objective lens 1 and the second objective lens 2 have optical axes that are parallel to each other by the tilt adjustment, there is no difference of occurrence direction and occurrence quantity of coma aberration between them. However, the first and the second objective lenses 1 and 2 may have the same inclination with respect to the recording surface of the optical disc 17 (i.e., the state where their optical axes are not perpendicular to the recording surface). Tilt adjustment for this inclination with respect to the recording surface of the optical disc 17 can be performed by adjusting a tilt of the entire actuator 9 as shown in Fig. 5. Even if coma aberration occurs in both the first and the second objective lenses 1 and 2, the both coma aberration can be corrected by the tilt adjustment of the entire actuator 9 because the occurrence direction and the occurrence quantity are equal between them.

The tilt adjusting mechanism 8 described above has the sliding surface 3S that is a part a spherical surface having a center that is the principal point 2H of the second objective lens 2 (or its adjacent) as a surface for the sliding movement of the lens retaining cylinder 3 with respect to the protector member 4. Therefore, it is able to reduce relative tilt quantity between the first and the second objective lenses 1 and 2, and to prevent the first and the second objective lenses 1 and 2 from colliding against the optical disc 17. Furthermore, since the tilt adjusting mechanism 8 is used in the actuator 9 for driving the objective lens of the optical pickup devices 10A and 10B, it is able to obtain high optical performance for each of the first and the second objective lenses 1 and 2.

Since the tilt adjusting mechanism 8 described above has a structure in which the lens retaining cylinder 3 has the sliding surface 3S, it is sufficient that only the lens retaining cylinder 3 of the second objective lens 2 to be adjustment should be finished with high accuracy. Therefore, the load of accuracy on the protector member 4 can be reduced. Therefore, the optical pickup devices 10A and 10B can be easily improved to have high performance. In other words, since the protector member 4 is provided with the optical path hole 4B having a circular opening and a circular truncated cone shape, so that the sliding movement is performed on the inside portion 4E of the optical path hole 4B, the high performance optical pickup devices 10A and 10B can be realized with a simple structure.

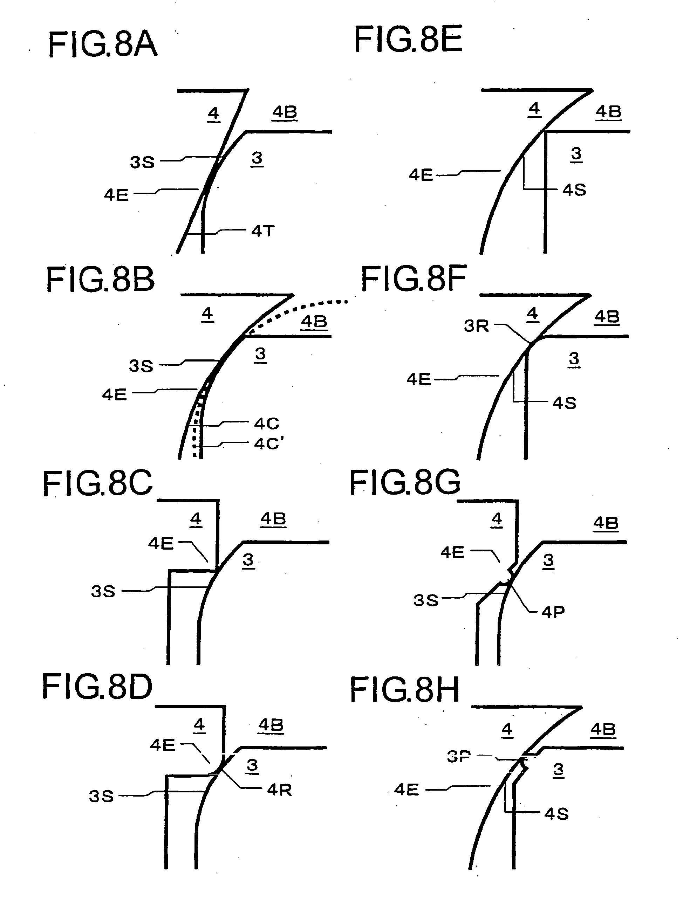

Since the optical path hole 4B has a circular truncated cone shape in the tilt adjusting mechanism 8 described above, the cross sectional shape of the taper surface 4T made up of the inside portion 4E of the protector member 4 has a linear shape as shown in Fig. 8A. This may have a curbed shape. More specifically, as shown in Fig. 8B, the inside portion 4E of the optical path hole 4B may be made up of a concave surface 4C' (as shown in the dotted line) having the same shape as the sliding surface 3S, or the inside portion 4E of the optical path hole 4B may be made up of a concave surface 4C having a curvature smaller than that of the sliding surface 3S. In order to perform the tilt adjustment by more stable sliding movement, it is preferable to form the inside portion 4E of the optical path hole 4B with the concave surface 4C or 4C' having the curved shape same as or similar to the sliding surface 3S.

As shown in Fig. 8C, it is possible to form the optical path hole 4B in a cylindrical shape, so that the sliding movement for the tilt adjustment is performed at the corner of the inside portion 4E of the optical path hole 4B. In this case, the inside portion 4E contacts with the sliding surface 3S at a circular line. Therefore, the sliding surface 3S of the lens retaining cylinder 3 may be damaged easily, so it is difficult to perform the tilt adjustment smoothly. In order to solve this problem, it is preferable to make the inside portion 4E of the optical path hole 4B as a convex surface 4R as shown in Fig. 8D. When the inside portion 4E is made up of the convex surface 4R, it is possible to perform the tilt adjustment smoothly.

On the contrary to the cases shown in Figs. 8C and 8D, it is possible to structure as shown in Figs. 8E and 8F, in which the inside portion 4E of the optical path hole 4B has the sliding surface 4S. More specifically, as a surface for sliding movement of the lens retaining cylinder 3 with respect to the protector member 4, the protector member 4 may have the sliding surface 4S that is a part of a spherical surface (a spherical surface having the radius R as shown in Fig. 3) having a center that is the principal point 2H of the second objective lens 2 (or its adjacent). If the inside portion 4E of the optical path hole 4B has the sliding surface 4S, it is sufficient that only the protector member 4 is finished with high accuracy. Thus, the load of accuracy on the lens retaining cylinder 3 can be reduced. Therefore, the optical pickup devices 10A and 10B can be easily improved to have high performance without making a structure of the lens retaining cylinder 3 complicated. In addition, if the sliding movement is performed on the convex surface 3R of the lens retaining cylinder 3 as shown in Fig. 8F, the tilt adjustment can be performed smoothly in the same manner as shown in Fig. 8D.

It is possible to provide protrusions 4P that contact with the sliding surface 3S at three points as shown in Fig. 8G so that the sliding movement is performed on the three protrusions 4P. Alternatively, it is possible to provide protrusions 3P that contact with the sliding surface 4S at three points as shown in Fig. 8H so that the sliding movement is performed on the three protrusions 3P. Since the sliding surface 3S or 4S is supported by the protrusions 4P or 3P at three points, the sliding movement can be performed stably.

As understood from the above description, the embodiment described above includes the structure as below. A tilt adjusting mechanism, which adjusts a tilt of at least one of a plurality of objective lenses arranged to face an optical disc so that they have the same inclination state, includes a lens retaining cylinder to which an objective lens to be a target of the tilt adjustment is fixed, and a protector member to which the lens retaining cylinder is fixed from a slidable state for the tilt adjustment. As a surface for sliding movement of the lens retaining cylinder with respect to the protector member, there is provided a sliding surface that is a part of a spherical surface having a center that is a principal point of the objective lens or its adjacent, and the protector member has a portion protruding toward the optical disc so as to prevent a collision between the objective lens and the optical disc.

According to this structure, protector member, there is provided a sliding surface that is a part of a spherical surface having a center that is a principal point of the objective lens or its adjacent as a surface for sliding movement of the lens retaining cylinder with respect to the protector member. Therefore, relative tilt quantity among a plurality of objective lenses can be reduced, and a collision between the optical disc and the objective lens can be prevented. If the tilt adjusting mechanism according to the present invention is used for an actuator for driving the objective lenses of an optical pickup device, high optical performance can be obtained for each of the plurality of objective lenses.

Adopting the structure in which the lens retaining cylinder has the sliding surface, it is sufficient to finish with high accuracy only the lens retaining cylinder of the objective lens to be a target of the adjustment. Therefore, the optical pickup device can be made to have high performance easily. For example, the protector member is provided with an optical path hole having a circular opening (e.g., a through hole having a circular truncated cone shape), so that the sliding movement is performed on the inside portion of the optical path hole. Thus, the optical pickup device can be improved to have high performance by a simple structure. Adopting a structure in which the inside portion of the optical path hole has the sliding surface, it is sufficient that only the protector member is finished with high accuracy. Therefore, the optical pickup device can be improved to have high performance without making a structure of the lens retaining cylinder complicated. In addition, adopting a structure in which the sliding movement is performed by three protrusions that contact with the sliding surface, the sliding movement can be performed stably.

## Claims

1. A tilt adjusting mechanism (8) that adjusts a tilt of at least one of a plurality of objective lenses (1,2) arranged to face an optical disc (17) so that they have the same inclination state, the tilt adjusting mechanism comprising:
a lens retaining cylinder (3) to which an objective lens to be a target of the tilt adjustment is fixed; and
a protector member (4) having a portion (40) protruding toward the optical disc (17) so as to prevent a collision between the objective lens and the optical disc, **characterized in that**
the lens retaining cylinder (3) is fixed to the protector member (4) from a slidable state for the tilt adjustment, wherein as a surface for sliding movement of the lens retaining cylinder (3) with respect to the protector member (4), there is provided a sliding surface (3S) that is a part of a spherical surface having a center that is a principal point of the objective lens or its adjacent.

2. The tilt adjusting mechanism according to claim 1, **characterized in that** the lens retaining cylinder (3) has the sliding surface (3S).

3. The tilt adjusting mechanism according to claim 1 or 2, **characterized in that** the protector member (4) is provided with an optical path hole (4B) having a circular opening so that the sliding movement is performed on an inside portion of the optical path hole (4B).

4. The tilt adjusting mechanism according to any one of claims 1 to 3, **characterized in that** the protector member (4) is provided with an optical path hole (4B) having a circular opening, and an inside portion of the optical path hole (4B) has the sliding surface (3S).

5. The tilt adjusting mechanism according to any one of claims 1 to 4, **characterized in that** the sliding movement is performed by three protrusions that contact with the sliding surface (3S).

6. An actuator for driving an objective lens, comprising:
a tilt adjusting mechanism according to any one of claims 1 to 5; and
a driving source (5) for moving the objective lens.

7. An optical pickup device equipped with an actuator according to claim 6.

8. The optical pickup device according to claim 7, **characterized in that** the objective lens includes first and second objective lenses (1,2), and the tilt adjusting mechanism adjusts a tilt of the second objective lens (2) so that both the first and the second objective lenses (1, 2) have the same tilt state.

9. The optical pickup device according to claim 8, **characterized in that** the lens retaining cylinder (3) has the sliding surface (3S), the protector member (4) has an optical path hole (4B) with a circular opening, and the sliding movement is performed on the inside portion of the optical path hole.

## Patentansprüche

1. Neigungseinstellmechanismus (8), der die Neigung zumindest einer von mehreren Objektivlinsen (1, 2), die einer Bildplatte (17) zugewandt angeordnet sind, so einstellt, dass sie den gleichen Neigungszustand aufweisen, wobei der Neigungseinstellmechanismus Folgendes umfasst:
einen Linsenhaltezylinder (3), an dem eine Objektivlinse, die das Ziel der Neigungseinstellung ist, befestigt ist; und
ein Schutzelement (4), das einen Abschnitt (4Q) aufweist, der in Richtung der Bildplatte (17) so vorsteht, dass er einen Zusammenstoß zwischen der Objektivlinse und der Bildplatte verhindert, **dadurch gekennzeichnet, dass**
der Linsenhaltezylinder (3) an dem Schutzelement (4) aus einem verschiebbaren Zustand für die Neigungseinstellung befestigt wird, wobei als Oberfläche für eine Gleitbewegung des Linsenhaltezylinders (3) in Bezug auf das Schutzelement (4) eine Gleitfläche (3S) vorgesehen ist, die ein Teil einer Kugeloberfläche ist, die eine Mitte aufweist, die ein Hauptpunkt der Objektivlinse oder ihr Nachbar ist.

2. Neigungseinstellmechanismus nach Anspruch 1, **dadurch gekennzeichnet, dass** der Linsenhaltezylinder (3) die Gleitfläche (3S) aufweist.

3. Neigungseinstellmechanismus nach Anspruch 1 oder 2, **dadurch gekennzeichnet, dass** das Schutzelement (4) mit einem optischen Wegloch (4B) versehen ist, das eine kreisförmige Öffnung aufweist, so dass die Gleitbewegung auf einem Innenabschnitt des optischen Weglochs (4B) durchgeführt wird.

4. Neigungseinstellmechanismus nach irgendeinem der Ansprüche 1 bis 3, **dadurch gekennzeichnet, dass** das Schutzelement (4) mit einem optischen Wegloch (4B) versehen ist, das eine kreisförmige Öffnung aufweist, und ein Innenabschnitt des optischen Weglochs (B) die Gleitfläche (3S) aufweist.

5. Neigungseinstellmechanismus nach irgendeinem der Ansprüche 1 bis 4, **dadurch gekennzeichnet, dass** die Gleitbewegung von drei Vorsprüngen durchgeführt wird, die mit der Gleitfläche (3S) in Berührung sind.

6. Aktuator zum Antreiben einer Objektivlinse, mit:
einem Neigungseinstellmechanismus nach irgendeinem der Ansprüche 1 bis 5; und
einer Antriebsquelle (5) zum Bewegen der Objektivlinse.

7. Optische Aufnahmevorrichtung, die mit einem Aktuator nach Anspruch 6 ausgestattet ist.

8. Optische Aufnahmevorrichtung nach Anspruch 7, **dadurch gekennzeichnet, dass** die Objektivlinse erste und zweite Objektivlinsen (1, 2) beinhaltet und der Neigungseinstellmechanismus eine Neigung der zweiten Objektivlinse (2) so einstellt, dass sowohl die erste als auch die zweite Objektivlinse (1, 2) den gleichen Neigungszustand aufweisen.

9. Neigungseinstellmechanismus nach Anspruch 8, **dadurch gekennzeichnet, dass** der Linsenhaltezylinder (3) die Gleitfläche (3S) aufweist, das Schutzelement (4) ein optisches Wegloch (4B) mit einer kreisförmigen Öffnung aufweist und die Gleitbewegung auf dem Innenabschnitt des optischen Weglochs durchgeführt wird.

## Revendications

1. Mécanisme de réglage d'inclinaison (8) qui règle une inclinaison d'au moins une lentille d'objectif parmi une pluralité de lentilles d'objectif (1, 2) disposées pour faire face à un disque optique (17) de sorte qu'elles se trouvent dans le même état d'inclinaison, le mécanisme de règlage d'inclinaison comprenant :
un cylindre de retenue de lentille (3) auquel est fixée une lentille d'objectif qui doit faire l'objet du réglage d'inclinaison ; et
un élément de protection (4) possédant une partie (4Q) faisant saillie vers le disque optique (17) afin d'empêcher une collision entre la lentille d'objectif et le disque optique, **caractérisé en ce que**
le cylindre de retenue de lentille (3) est fixé à l'élément de protection (4) à partir d'un état coulissant pour le réglage de l'inclinaison, dans lequel
il est prévu comme surface pour le mouvement coulissant du cylindre de retenue de lentille (3) par rapport à l'élément de protection (4), une surface de coulissement (3S) qui fait partie d'une surface sphérique dont le centre est un point principal de l'objectif de lentille ou un point adjacent de celle-ci.

2. Le mécanisme de réglage d'inclinaison selon la revendication 1, **caractérisé en ce que** le cylindre de retenue de lentille (3) possède la surface de coulissement (3S).

3. Le mécanisme de réglage d'inclinaison selon la revendication 1 ou 2, **caractérisé en ce que** l'élément de protection (4) est muni d'un orifice de chemin optique (4B) possédant une ouverture circulaire de sorte que le mouvement coulissant est effectué sur une partie intérieure de l'orifice de chemin optique (4B).

4. Le mécanisme de réglage d'inclinaison selon l'une quelconque des revendications 1 à 3, **caractérisé en ce que** l'élément de protection (4) est muni d'un orifice de chemin optique (4B) possédant une ouverture circulaire et une partie intérieure de l'orifice de chemin optique (4B) possède la surface de coulissement (3S).

5. Le mécanisme de réglage d'inclinaison selon l'une quelconque des revendications 1 à 4, **caractérisé en ce que** le mouvement coulissant est effectué au niveau de trois saillies qui entrent en contact avec la surface de coulissement (3S).

6. Actionneur permettant d'entraîner une lentille d'objectif, comprenant :
un mécanisme de réglage d'inclinaison selon l'une quelconque des revendications 1 à 5 ; et
une source d'entraînement (5) permettant de déplacer la lentille d'objectif.

7. Dispositif de lecture optique équipé d'un actionneur selon la revendication 6.

8. Le dispositif de lecture optique selon la revendication 7, **caractérisé en ce que** la lentille d'objectif inclut une première et une seconde lentilles (1, 2) et le mécanisme de réglage d'inclinaison règle une inclinaison de la seconde lentille d'objectif (2) de sorte que la première lentille et la seconde lentille d'objectif (1, 2) se trouvent dans le même état d'inclinaison.

9. Le dispositif de lecture optique selon la revendication 8, **caractérisé en ce que** le cylindre de retenue de lentille (3) possède la surface de coulissement (3S), l'élément de protection (4) possède un orifice de chemin optique (4B) avec une ouverture circulaire et le mouvement coulissant s'effectué sur la partie intérieure de l'orifice de chemin optique.
